# FASCICULE DE BREVET EUROPEEN

(11) **EP 3 650 325 B1**
(45) Date de publication et mention de la délivrance du brevet: **08.06.2022**
(21) Numéro de dépôt: 19207038.1
(22) Date de dépôt: 05.11.2019
(51) Int. Cl.: B62K 7/00, B62K 5/02, B62K 3/00, B62K 7/04

(54) **VEHICULE DE TRANSPORT**
TRANSPORTFAHRZEUG
TRANSPORT VEHICLE

(30) Priorité: 07.11.2018 FR 1860246
(43) Date de publication de la demande: 13.05.2020
(73) Titulaire: Hublex, 91400 Orsay (FR)
(72) Inventeur: MARTINELLI, Pascal, 92330 SCEAUX (FR); WILLIAMS, Alexis, 94230 CACHAN (FR); PIERSON, Tony, 93320 PAVILLONS-SOUS-BOIS (FR)
(74) Mandataire: Lavialle, Bruno François Stéphane

(56) Documents cités:
- CN-B- 103 587 618
- FR-A1- 2 996 206
- JP-U- H0 276 594
- US-A- 5 092 616
- US-A1- 2013 020 142
- US-A1- 2015 275 445
- US-A1- 2018 037 288
- Anonymous: "Hublex, les gyropodes dédiés à la logistique - Stratégies Logistique", , 10 mai 2019 (2019-05-10), XP055619195, Extrait de l'Internet: URL:https://www.strategielogistique.org/st rategies/Hublex-les-gyropodes-dedies-a-la, 8967 [extrait le 2019-09-06]

## Description

L'invention concerne un véhicule électrique monoplace sur lequel l'opérateur se tient debout, et permettant le transport d'un chargement (typiquement de l'ordre de quelques kilogrammes).

### ARRIERE PLAN DE L'INVENTION

On connaît par exemple des véhicules bi-roues gyro-stabilisés adaptés au transport d'un chargement léger, en général porté par un support solidarisé au mât du véhicule. Mais ces véhicules ne peuvent transporter que des charges légères et sont difficilement chargeables lorsque le conducteur n'est pas en position sur le véhicule.

On connaît également des engins de transport de chargement lourd, du type à fourche. Ces engins sont lourds et encombrants et onéreux en exploitation.

On connaît par ailleurs des trottinettes ou des vélos à assistance électrique, ou des triporteurs. Les deux premiers types de véhicules ne permettent guère le transport de chargement d'une certaine importance, tandis que le dernier type est encombrant. En outre, les vélos et triporteurs ne permettent pas de manœuvres serrées.

On connaît enfin des véhicules à trois roues ou plus, avec un premier ensemble roulant monté sur le châssis du véhicule sans possibilité d'orientation, et un second ensemble roulant monté avec possibilité d'orientation. En général, le second ensemble roulant est monté pivotant le châssis du véhicule, le pivotement du second ensemble roulant étant directement provoqué par le conducteur du véhicule via un volant à l'extrémité d'une colonne de direction en prise directe avec le second ensemble roulant. Le chargement est alors porté en avant de la colonne de direction par un support solidarisé au châssis du véhicule ou directement à la colonne de direction.

Cependant, de tels véhicules comportent divers inconvénients. Le chargement est porté en avant du véhicule, en dehors du polygone de sustentation délimité par les points de contact théoriques des roues au sol, ce qui peut poser des problèmes de stabilité dans certaines conditions de chargement et/ou d'orientation du second ensemble roulant.

On connaît également des vélos cargo dont le chargement est porté en avant d'une colonne de direction. La roue avant est rejetée loin en avant pour permettre la réception du chargement entre la roue avant et la colonne de direction. Le véhicule est encombrant et présente de grands rayons de braquage, et souffre d'une stabilité à l'arrêt délicate.

L'art antérieur est notamment illustré par le document CN 103 587 618 B

### OBJET DE L'INVENTION

L'invention vise à proposer un véhicule particulièrement compact et manœuvrable, adapté au transport d'un chargement.

### PRESENTATION DE L'INVENTION

En vue de la réalisation de ce but, on propose un véhicule électrique monoplace comportant un châssis portant au moins trois roues réparties en deux ensembles roulants dont l'un est monté fixe à l'arrière du châssis, et l'autre est monté pivotant à l'avant du châssis, l'un au moins des ensembles roulants étant motorisé électriquement, le châssis portant :
- un actionneur d'orientation ayant un arbre d'entraînement relié en rotation à l'ensemble roulant pivotant par un organe de liaison en rotation et commandé au moyen d'un organe de commande de direction ;
- une plateforme de réception d'un conducteur debout disposée entre l'ensemble roulant fixe et le mât ;
- une plateforme de réception d'un chargement placé en avant du mât ;
l'actionneur d'orientation étantdisposé entre les deux plateformes, la plateforme de réception du chargement s'étendant à l'aplomb de l'ensemble roulant pivotant. Selon l'invention, le second ensemble roulant comporte une unique roue et est muni d'un unique pivot pour son montage pivotant sur le châssis, de sorte que l'organe de liaison en rotation s'étend sous la plateforme de réception du chargement pour relier directement l'arbre d'entraînement de l'actionneur d'orientation au pivot de l'ensemble roulant pivotant.

Ainsi, le positionnement du chargement à l'aplomb de l'ensemble roulant pivotant rend le véhicule particulièrement compact, tout en améliorant la stabilité du véhicule puisque celui-ci peut-être chargé sans la présence du conducteur sur le véhicule.

L'arbre d'entraînement de l'organe d'orientation peut être constitué par l'extrémité du mât si celui-ci est monté pivotant sur le châssis, par l'extrémité d'une colonne monté pivotante à l'intérieur du mât, ou encore par l'arbre de sortie d'un motoréducteur.

L'utilisation d'un organe de liaison sous forme d'un élément souple de type chaîne ou courroie permet, en utilisant des poulies de diamètre adapté, un angle de pivotement de l'ensemble roulant pivotant plus important que l'angle de pivotement de l'organe de commande de direction, facilitant les demi-tours sur place.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue en perspective d'un véhicule selon un premier mode de réalisation de l'invention, la plateforme de réception du chargement ayant été représentée en pointillés pour plus de clarté ;
- la figure 2 est une vue en perspective du véhicule de la figure 1 selon un autre angle, la plateforme de réception du chargement ayant été omise ;
- la figure 3 est une vue de côté du véhicule de la figure 1 ;
- la figure 4 est une vue en perspective écorchée du véhicule de la figure 1, les plateformes de réception du conducteur et du chargement ayant été surélevées pour mieux illustrer le châssis du véhicule, l'un des flancs ayant été enlevé pour plus de clarté ;
- la figure 5 est une vue en perspective partielle du véhicule de la figure 1, le châssis ayant été coupé selon un plan de symétrie vertical pour mieux illustrer le mécanisme de transmission de pivotement de la roue avant ;
- la figure 6 est une vue analogue à celle de la figure 5 d'un véhicule selon un deuxième mode de réalisation particulier de l'invention, dont l'organe de transmission de pivotement de la roue avant comporte un motoréducteur.

Sur certaines des figures, le sens d'avancement normal du véhicule est indiqué par une flèche à double trait. Les termes avant, arrière, sont à comprendre par référence au sens d'avancement normal du véhicule

### DESCRIPTION DETAILLEE DE L'INVENTION

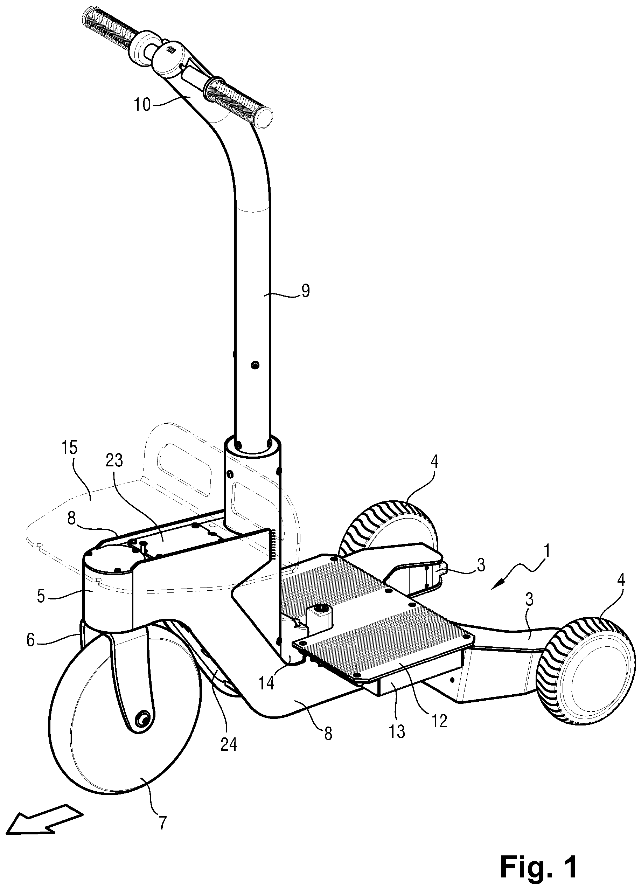

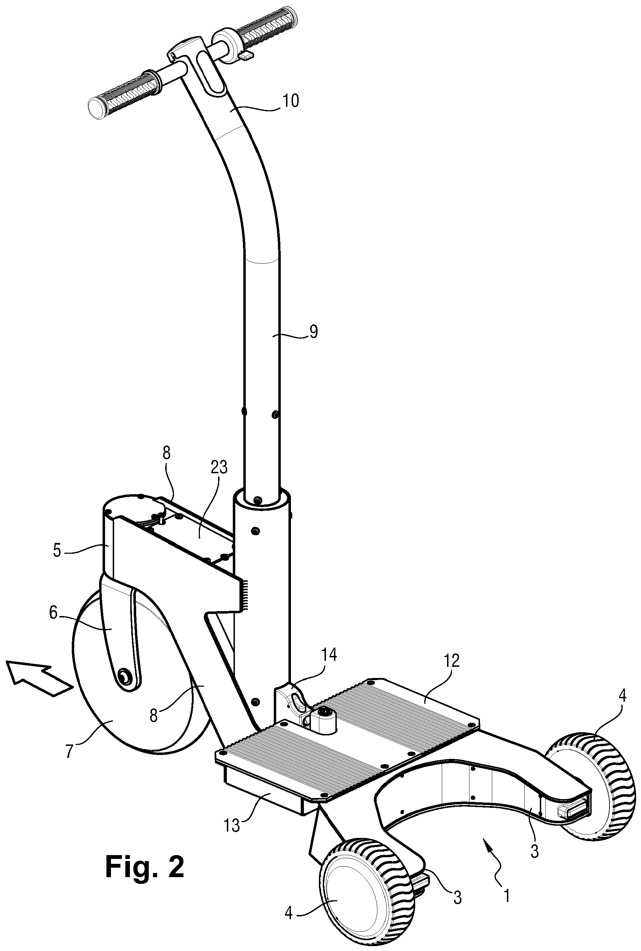

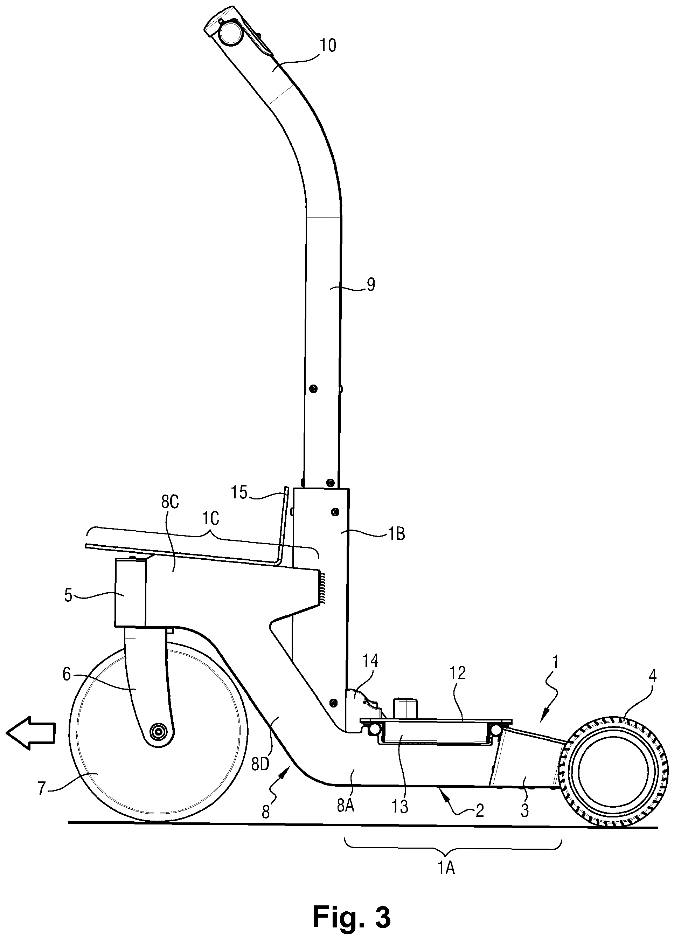

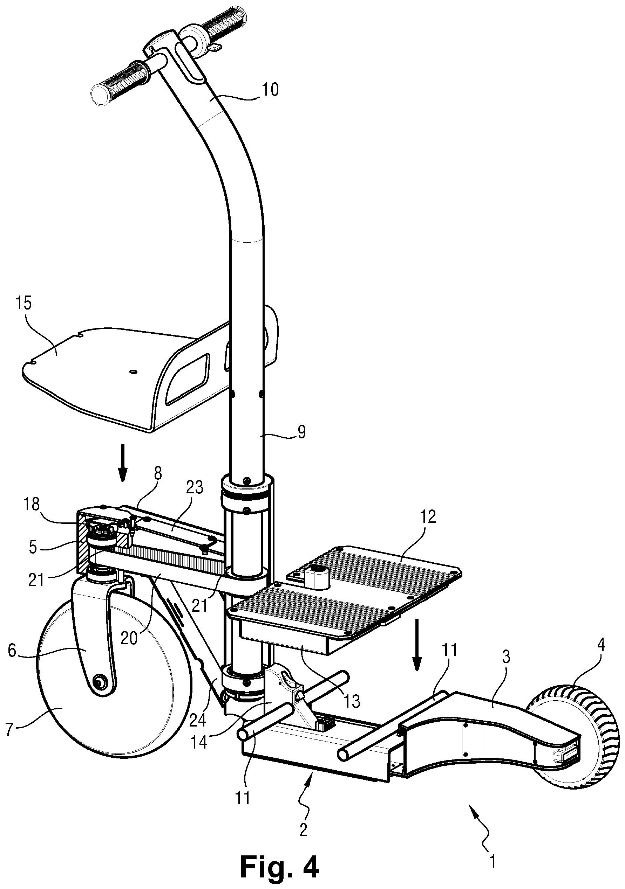

Selon un premier mode particulier de réalisation de l'invention illustré aux figures 1 à 5, le véhicule de l'invention comporte un châssis 1 qui se décompose en une portion de châssis arrière 1A, et une portion de châssis avant 1C reliés par des longerons 8 qui en forment les flancs, ainsi qu'une une colonne verticale 1B qui s'étend entre les deux portions de châssis 1A,1C.

La portion de châssis arrière 1A comporte une poutre 2 dont les portions 8A des longerons 8 forment les flancs et qui est fermée par un fond 25 et un couvercle 26. La poutre 2 a une extrémité arrière prolongée par deux extensions latérales 3 pour porter des roues 4 respectives. Les roues 4 sont montées à rotation sur des essieux montés fixes sur les extensions latérales 3 et forment l'ensemble roulant fixe du véhicule. Ici, les roues 4 sont motorisées.

La portion de châssis avant 1C forme de même une poutre délimitée par des portions avant 8C des longerons 8 reliés par un couvercle 23 et dont une extrémité avant portant porte un fourreau 5 destiné à recevoir le pivot 18 d'une fourche 6 portant une roue 7, formant l'ensemble roulant pivotant du véhicule.

Entre les portions arrière 1A et avant 1C du châssis s'étend une colonne 1B renfermant un actionneur d'orientation, ainsi que cela sera détaillé plus loin. Ici, la colonne 1B s'étend entre les longerons 8 et l'extrémité arrière des portions avant 8C des longerons 8 est ici soudée à la colonne 1B. Les portions arrières 8A et avant 8C des longerons 8 sont reliés par des portions intermédiaires 8D entre lesquelles s'étend un bouclier 24.

Un mât 9 est monté pivotant dans la colonne 1B et s'étend depuis le sommet de la colonne 1B pour recevoir un organe de commande de direction, en l'occurrence ici un guidon 10 monté au sommet du mât 9. La poutre 2 de la portion de châssis arrière 1A porte deux traverses 11 pour recevoir une plateforme 12 de réception du conducteur sur laquelle ce dernier monte pour conduire le véhicule. Cette plateforme 12 est ici amovible et comporte un boîtier 13 renfermant une batterie d'accumulateur pour l'alimentation des moteurs des roues 4. Une embase 14 est installée au pied de la colonne 1B pour permettre la connexion électrique de ces accumulateurs au circuit électrique du véhicule. Cette plateforme 12 peut être prévue identique ou compatible avec son équivalent illustré dans le document FR3045510 décrivant un gyropode. Enfin, une plateforme 15 est rapportée par-dessus la portion avant de châssis 1C pour recevoir un chargement. Ainsi le conducteur est porté par la plateforme 12 entre l'ensemble roulant arrière et le mât, tandis que le chargement est porté par la plateforme 15 en avant du mât, sensiblement à l'aplomb du pivot 18 de la roue 7.

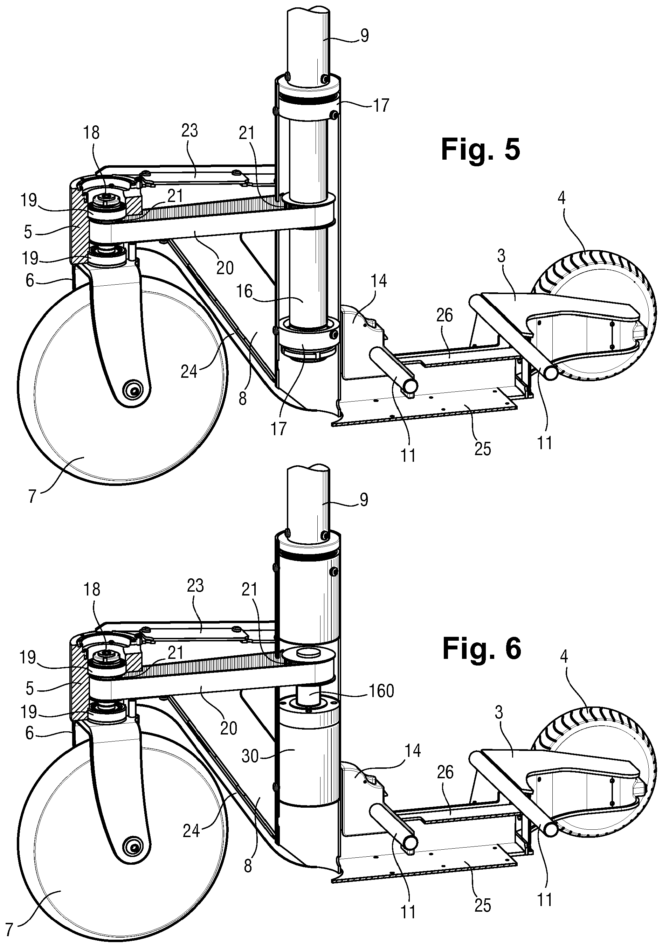

Selon un aspect essentiel de l'invention plus particulièrement visible à la figure 5, l'extrémité inférieure du mât 9 forme un arbre d'entraînement 16 reçu à rotation à l'intérieur de la colonne 1B au moyen de deux paliers de guidage en rotation 17, tandis que le pivot 18 de la fourche 6 est reçu à rotation à l'intérieur du fourreau 5 au moyen de deux paliers de guidage en rotation 19. Une courroie crantée 20 s'étend à l'intérieur de la portion de châssis avant 1C pour relier deux poulies 21 montées respectivement sur le pivot 18 et l'arbre d'entraînement 16 pour solidariser en rotation le pivot 18 à l'arbre d'entraînement 16, et donc au guidon 10 via le mât pivotant 9. Le guidon 10, le mât 9 et l'arbre d'entraînement 16 forment ainsi un actionneur d'orientation de la roue avant commandant son pivotement.

Les dispositions de l'invention présentent plusieurs avantages. La courroie crantée 20 s'étend sous la plateforme de réception du chargement, ici à l'intérieur du châssis 1, de sorte qu'elle ne risque pas d'être détériorée par un choc du véhicule contre un obstacle. Le choix d'un organe de liaison du type souple sans fin (une courroie comme illustré, ou encore une chaîne) permet une grande amplitude de débattement angulaire de la roue, y compris un débattement non limité. Par ailleurs, en choisissant sur l'arbre d'entraînement 16 une poulie de diamètre plus important que le diamètre de la poulie du pivot 18, on réalise une surmultiplication qui permet, pour un débattement angulaire donné du guidon 16, un débattement angulaire plus grand de la roue avant 7. On remarquera que les poulies 21 sont installées sur le pivot 18 et sur l'arbre d'entraînement 16 entre les paliers de guidage en rotation respectifs.

En outre, la disposition du chargement par-dessus la portion de châssis avant 1C, et donc à l'aplomb du pivot 18, offre un seuil de chargement relevé, ce qui facilite la manutention du chargement par le conducteur alors qu'il est monté sur le véhicule ou à proximité de celui-ci. Enfin, le centre de gravité du chargement est sensiblement situé à l'aplomb du pivot 18 de la roue avant 7, et donc très proche ou à l'intérieur du polygone de sustentation du véhicule, ce qui contribue à sa stabilité.

Selon un deuxième mode particulier de réalisation illustré à la figure 6, le mât 9 est maintenant monté fixe sur la colonne 1B. L'actionneur d'orientation est maintenant constitué par un motoréducteur 30 logé dans la colonne 1B et ayant un arbre de sortie 160 qui forme l'arbre d'entraînement en pivotement de la roue avant 7 et qui est relié en rotation au pivot 18 de la roue avant 7 au moyen d'une courroie crantée 20. Ici, le guidon 10 est monté pivotant à l'extrémité supérieure du mât 9 et la rotation du guidon 10 est mesurée au moyen d'un capteur de rotation (par exemple un capteur magnétique) dont le signal est exploité pour commander le motoréducteur 30 en rotation dans un sens ou dans l'autre, selon une loi de commande proportionnelle ou une loi de commande non-linéaire accentuant le pivotement de la roue avant 7 aux grands angles du guidon.

L'invention n'est pas limitée à ce qui vient d'être décrit, mais englobe au contraire toute variante entrant dans le cadre défini par les revendications.

En particulier, bien qu'ici l'ensemble roulant fixe comporte deux roues 4 et l'ensemble roulant pivotant comporte une seule roue 7. Ici les roues de l'ensemble roulant fixe sont motorisées, mais on pourra alternativement motoriser la roue de l'ensemble roulant pivotant.

Bien qu'ici le châssis soit réalisé à l'aide de tôles métalliques, le châssis pourra prendre toute forme du moment que l'actionneur d'orientation soit disposé entre les deux plateformes, la plateforme de réception du chargement s'étendant à l'aplomb du pivot du second ensemble roulant pivotant de sorte que l'organe de liaison en rotation s'étend sous la plateforme de réception du chargement pour relier directement l'arbre d'entraînement de l'actionneur d'orientation au pivot de l'ensemble roulant pivotant.

Bien qu'ici l'organe de liaison en rotation entre l'arbre d'entraînement et le pivot de l'ensemble roulant pivotant soit un élément souple sans fin du type courroies crantée ou chaîne, on pourra également utiliser un organe de liaison rigide telle qu'une cascade de pignons reliant l'arbre d'entraînement et le pivot, les pignons s'étendant sous la plateforme de réception du chargement.

## Revendications

1. Véhicule électrique monoplace comportant un châssis (1) portant trois roues (4,4,7) réparties en deux ensembles roulants dont un premier ensemble roulant (4,4) monté fixe sur le châssis, et un second ensemble roulant (7) monté pivotant sur le châssis, l'un au moins des ensembles roulants étant motorisé électriquement, le châssis portant :
- une plateforme (12) de réception d'un conducteur debout disposée en arrière d'un mât (9) par référence à une direction d'avancement du véhicule ;
- une plateforme (15) de réception d'un chargement placée en avant du mât ;
- un actionneur d'orientation ayant un arbre d'entraînement (16;160) relié en rotation à l'ensemble roulant pivotant par un organe de liaison en rotation (20) et commandé au moyen d'un organe de commande de direction (10) ;
l'actionneur d'orientation étant disposé entre les deux plateformes, la plateforme de réception du chargement s'étendant à l'aplomb du second ensemble roulant ; **caractérisé en ce que** le second ensemble roulant comporte une unique roue et est muni d'un unique pivot pour son montage pivotant sur le châssis, de sorte que l'organe de liaison en rotation s'étend sous la plateforme de réception du chargement pour relier directement l'arbre d'entraînement de l'actionneur d'orientation au pivot de l'ensemble roulant pivotant.

2. Véhicule selon la revendication 1, dans lequel le châssis comporte une portion de châssis arrière (1A) portant la plateforme de réception du conducteur (12) et une portion de châssis avant (1C) portant la plateforme de réception du chargement entre lesquelles s'étend une colonne (1B) sensiblement verticale en service abritant l'arbre d'entraînement (16;160).

3. Véhicule selon la revendication 2, dans lequel l'organe de liaison en rotation (20) s'étend à l'intérieur de la portion de châssis avant (1C).

4. Véhicule selon la revendication 2, dans lequel le mât (9) s'étend depuis une extrémité haute de la colonne (1B).

5. Véhicule selon la revendication 2, dans lequel l'arbre d'entraînement (16) est guidé en rotation dans la colonne (1B) par deux paliers de guidage en rotation (17) et est solidaire en rotation du mât à l'extrémité duquel l'organe de commande de direction (10) est monté.

6. Véhicule selon la revendication 2, dans lequel l'arbre d'entraînement est un arbre de sortie (160) d'un motoréducteur (30) logé dans la colonne (1B).

7. Véhicule selon la revendication 1, dans lequel l'organe de liaison en rotation (20) est du type souple sans fin, comme une courroie ou une chaîne.

8. Véhicule selon la revendication 7, dans lequel l'organe de liaison en rotation souple sans fin (20) est monté sur des poulies (21) respectives de l'arbre d'entraînement (16) et du pivot (18) qui s'étendent entre des paliers de guidage en rotation de l'arbre d'entraînement et du pivot.

9. Véhicule selon la revendication 7, dans lequel l'élément de liaison en rotation souple sans fin est monté sur des poulies respectives de l'arbre d'entraînement (16) et du pivot (18), la poulie de l'arbre d'entraînement ayant un diamètre plus important qu'un diamètre de la poulie du pivot de sorte à réaliser une surmultiplication.

10. Véhicule selon la revendication 1, dans lequel la plateforme de réception du conducteur (12) est amovible et comporte un boîtier de réception d'une batterie d'accumulateurs (13) pour au moins l'alimentation de celui de l'ensemble roulant qui est motorisé.

## Patentansprüche

1. Einzelplatz-Elektrofahrzeug, umfassend ein Fahrgestell (1), das drei Räder (4, 4, 7) trägt, die in zwei rollende Einheiten eingeteilt sind, darunter eine erste rollende Einheit (4, 4), die ortsfest an dem Fahrgestell montiert ist, und eine zweite rollende Einheit (7), die drehbar an dem Fahrgestell montiert ist, wobei mindestens eine der rollenden Einheiten elektrisch motorisiert ist, wobei das Fahrgestell trägt:
- eine Plattform (12) zur Aufnahme eines stehenden Fahrers, die hinter einer Stange (9) in Bezug auf eine Fahrtrichtung des Fahrzeugs angeordnet ist;
- eine Plattform (15) zur Aufnahme einer Ladung, die vor der Stange platziert ist;
- einen Lenkaktor, der eine Antriebswelle (16; 160) hat, die in Drehung mit der drehbaren rollenden Einheit über ein Drehverbindungsorgan (20) verbunden und mittels eines Lenkungssteuerungsorgans (10) gesteuert wird;
wobei der Lenkaktor zwischen den beiden Plattformen angeordnet ist, wobei sich die Plattform zur Aufnahme der Ladung senkrecht über der zweiten rollenden Einheit erstreckt; **dadurch gekennzeichnet, dass** die zweite rollende Einheit ein einziges Rad umfasst und mit einem einzigen Drehzapfen für ihre drehbare Montage an dem Fahrgestell versehen ist, derart, dass sich das Drehverbindungsorgan unter der Plattform zur Aufnahme der Ladung erstreckt, um die Antriebswelle des Lenkaktors direkt mit dem Drehzapfen der drehbaren rollenden Einheit zu verbinden.

2. Fahrzeug nach Anspruch 1, bei dem das Fahrgestell einen hinteren Fahrgestellabschnitt (1A) umfasst, der die Plattform zur Aufnahme des Fahrers (12) trägt, und einen vorderen Fahrgestellabschnitt (1C), der die Plattform zur Aufnahme der Ladung trägt, zwischen denen sich eine im Betrieb im Wesentlichen vertikale Säule (1B) erstreckt, die die Antriebswelle (16; 160) aufnimmt.

3. Fahrzeug nach Anspruch 2, bei dem sich das Drehverbindungsorgan (20) im Inneren des vorderen Fahrgestellabschnitts (1C) erstreckt.

4. Fahrzeug nach Anspruch 2, bei dem sich die Stange (9) von einem oberen Ende der Säule (1B) aus erstreckt.

5. Fahrzeug nach Anspruch 2, bei dem die Antriebswelle (16) in Drehung in der Säule (1B) durch zwei Drehführungslager (17) geführt und drehfest mit der Stange verbunden ist, an deren Ende das Lenkungssteuerungsorgan (10) montiert ist.

6. Fahrzeug nach Anspruch 2, bei dem die Antriebswelle eine Abtriebswelle (160) eines in der Säule (1B) untergebrachten Getriebemotors (30) ist.

7. Fahrzeug nach Anspruch 1, bei dem das Drehverbindungsorgan (20) vom endlosen flexiblen Typ ist, wie ein Riemen oder eine Kette.

8. Fahrzeug nach Anspruch 7, bei dem das endlose flexible Drehverbindungsorgan (20) auf jeweiligen Riemenscheiben (21) der Antriebswelle (16) und des Drehzapfens (18) montiert ist, die sich zwischen Drehführungslagern der Antriebswelle und des Drehzapfens erstrecken.

9. Fahrzeug nach Anspruch 7, bei dem das endlose flexible Drehverbindungselement auf jeweiligen Riemenscheiben der Antriebswelle (16) und des Drehzapfens (18) montiert ist, wobei die Riemenscheibe der Antriebswelle einen Durchmesser hat, der größer als ein Durchmesser der Riemenscheibe des Drehzapfens ist, sodass eine Übersetzung ins Schnelle erfolgt.

10. Fahrzeug nach Anspruch 1, bei dem die Plattform zur Aufnahme des Fahrers (12) abnehmbar ist und ein Gehäuse zur Aufnahme einer Akkumulatorenbatterie (13) zumindest für die Versorgung derjenigen rollenden Einheit umfasst, die motorisiert ist.

## Claims

1. One-person electric vehicle including a chassis (1) carrying three wheels (4, 4, 7) divided into two rolling assemblies including a first rolling assembly (4, 4) fixedly mounted on the chassis and a second rolling assembly (7) pivotally mounted on the chassis, at least one of the rolling assemblies being electrically motorized, the chassis carrying:
- a platform (12) for receiving a standing driver arranged behind a pole (9) with reference to a direction of travel of the vehicle;
- a platform (15) for receiving a load placed in front of the pole;
- an orientating actuator having a drive shaft (16; 160) connected in rotation to the pivoting rolling assembly by a rotational connection member (20) and controlled by means of a steering control member (10);
the orientation actuator being arranged between the two platforms, the load-receiving platform extending directly above the second rolling assembly; **characterised in that** the second rolling assembly includes a single wheel and has a single pivot for pivotally mounting it on the chassis so that the rotational connection member extends under the load-receiving platform to connect the drive shaft of the orientating actuator directly to the pivot of the pivoting rolling assembly.

2. Vehicle according to claim 1, in which the chassis includes a rear chassis portion (1A) carrying the driver-receiving platform (12) and a front chassis portion (1C) carrying the load-receiving platform between which extends a column (1B) substantially vertical when in service housing the drive shaft (16; 160).

3. Vehicle according to claim 2, in which the rotational connection member (20) extends inside the front chassis portion (1C).

4. Vehicle according to claim 2, in which the pole (9) extends from an upper end of the column (1B).

5. Vehicle according to claim 2, in which the drive shaft (16) is guided in rotation in the column (1B) by two rotation guide bearings (17) and is integral in rotation with the pole at the end of which the steering control member (10) is mounted.

6. Vehicle according to claim 2, in which the drive shaft is an output shaft (160) of a geared motor (30) housed in the column (1B).

7. Vehicle according to claim 1, in which the rotational connection member (20) is of the endless flexible type, such as a belt or a chain.

8. Vehicle according to claim 7, in which the endless flexible rotational connection member (20) is mounted on respective pulleys (21) of the drive shaft (16) and of the pivot (18) that extend between rotational guide bearings of the drive shaft and of the pivot.

9. Vehicle according to claim 7, in which the endless flexible rotatable connection member is mounted on respective pulleys of the drive shaft (16) and of the pivot (18), the drive shaft pulley having a diameter larger than a diameter of the pivot pulley so as to achieve overdrive.

10. Vehicle according to claim 1, in which the driver-receiving platform (12) is removable and includes a housing for receiving a battery (13) for supplying power to at least the rolling assembly that is motorized.
